# FASCICULE DE BREVET EUROPEEN

(11) **EP 3 727 644 B1**
(45) Date de publication et mention de la délivrance du brevet: **15.09.2021**
(21) Numéro de dépôt: 19710757.6
(22) Date de dépôt: 18.02.2019
(51) Int. Cl.: B01D 39/16

(54) **PROCÉDÉ DE FLUORATION D'UN FILTRE D'EMBOUT DE PIPETTE, EMBOUT DE PIPETTE, SON PROCÉDÉ DE FABRICATION ET PIPETTE ASSOCIÉS**
VERFAHREN ZUM FLUORIEREN EINES PIPETTENENDFILTERS, PIPETTENENDFILTER, IHRE HERSTELLUNGSVERFAHREN UND ENTSPRECHENDE PIPETTE
METHOD FOR FLUORINATING A FILTER FOR A PIPETTE TIP, PIPETTE TIP, ASSOCIATED PRODUCTION METHOD AND PIPETTE

(30) Priorité: 20.02.2018 FR 1851441
(43) Date de publication de la demande: 28.10.2020
(73) Titulaire: GILSON SAS, 95400 Villiers-le-Bel (FR); Universite Clermont Auvergne, 63000 Clermont Ferrand (FR); CENTRE NATIONAL DE LA RECHERCHE SCIENTIFIQUE, 75794 Paris Cedex 16 (FR); SIGMA CLERMONT, 63178 Aubière Cedex (FR)
(72) Inventeur: BATISSE, Nicolas, 63170 PERIGNAT LES SARLIEVE (FR); DUBOIS, Marc, 63000 CLERMONT-FERRAND (FR); PEYROUX, Jérémy, 19200 USSEL (FR); GUIEU PRESLE, Béatrice, 95170 DEUIL-LA-BARRE (FR)
(74) Mandataire: Brevalex
(86) Numéro de dépôt international: PCT/FR2019/050359
(87) Numéro de publication internationale: WO 2019/162602

(56) Documents cités:
- US-A1- 2004 028 890
- US-A1- 2004 213 918

## Description

### DOMAINE TECHNIQUE

La présente invention se rapporte à un procédé de fluoration d'un filtre formé par une structure solide poreuse en polyoléfine, ce filtre étant plus particulièrement destiné à équiper un embout de pipette.

La présente invention se rapporte également à un dispositif comprenant un filtre modifié par le procédé de fluoration mentionné ci-dessus et, plus particulièrement, à un embout de pipette comprenant un tel filtre, à une pipette de prélèvement munie d'un tel embout ainsi qu'à un procédé de fabrication d'un embout de pipette comprenant un filtre fluoré.

### ÉTAT DE LA TECHNIQUE ANTÉRIEURE

Une pipette est un équipement de laboratoire couramment employé en chimie analytique et en biologie moléculaire.

Ce dispositif fonctionne sous l'action d'un piston et permet d'aspirer ou de dispenser les volumes prélevés avec une grande précision. Une molette permet de calibrer les volumes à prélever par modulation de la colonne d'air disposée à l'intérieur du dispositif.

Une pipette est classiquement munie, à son extrémité inférieure, d'un embout, également appelé cône de pipette. Un tel embout est un élément amovible destiné à la collecte de l'échantillon prélevé. Il est classiquement fabriqué en polypropylène et peut, en fonction de la nature des échantillons à prélever, être stocké dans un conditionnement stérile.

Pour limiter la contamination potentielle de la surface interne et/ou externe de la partie basse de la pipette par l'échantillon prélevé et/ou la contamination potentielle de l'échantillon par une contamination antérieure présente sur la surface interne et/ou externe de la partie basse de la pipette, les embouts sont munis d'un filtre qui présente à la fois une structure solide poreuse, pour permettre le passage de l'air, mais aussi des propriétés hydrophobes, de manière à empêcher la remontée de tout ou partie des échantillons dans le corps de la pipette.

Plusieurs structures de filtres d'embout de pipette présentant simultanément une structure solide poreuse et des propriétés hydrophobes sont proposées à ce jour.

Le document EP 0 631 817 A1, référencé **[1]** dans la suite de la présente description, décrit un embout de pipette muni d'un filtre formé par une structure solide poreuse qui peut être en polyéthylène ou en polytétrafluoroéthylène (PTFE). Si ce polymère fluorocarboné confère effectivement de meilleures propriétés hydrophobes au filtre que le polyéthylène, le PTFE reste néanmoins un polymère bien plus onéreux que le polyéthylène. En outre, la transformation industrielle du PTFE pour l'obtention d'une structure solide poreuse est compliquée. Pour remédier à ces inconvénients, le document **[1]** propose également d'augmenter le caractère hydrophobe de filtres en polyéthylène poreux en traitant ceux-ci avec un silicone ou en les imprégnant avec du PTFE.

Le document US 2004/0028890 A1, référencé **[2],** décrit des matériaux poreux hydrophobes et/ou oléophobes pouvant être utilisés comme filtres d'embout de pipette. Ces matériaux comprennent un substrat thermoplastique poreux fritté et un matériau de traitement de surface. Ce matériau de traitement de surface peut être disposé à l'extérieur du substrat poreux, à l'intérieur de celui-ci, ou encore à l'intérieur ainsi qu'à l'extérieur de ce substrat poreux. Le substrat thermoplastique peut être en polyoléfine, en nylon, en polycarbonate ou en polyéthersulfone. Lorsqu'il revêt, au moins en partie, le substrat thermoplastique, le matériau de traitement de surface comprend des composés fluorés de haut poids moléculaire tels que des polyacrylates, des polyméthacrylates et/ou des polyesters acryliques fluorés. Lorsqu'il est disposé, au moins en partie, dans le substrat thermoplastique, le matériau de traitement de surface comprend des composés fluorés de faible poids moléculaire tels que des uréthanes, allophanates, oxazolidones et/ou pipérazines fluorés. Le matériau poreux hydrophobe et/ou oléophobe peut également être obtenu par frittage de particules thermoplastiques enrobées par le matériau de traitement de surface comprenant des composés fluorés de faible poids moléculaire.

Le document US 2012/0009100 A1, référencé **[3],** décrit un embout de pipette qui peut comprendre un filtre en polypropylène, en polyéthylène ou formé par un enchevêtrement de fibres. Ce filtre est rendu partiellement ou intégralement hydrophobe par l'application d'un revêtement hydrophobe obtenu à partir d'une solution de mouillage qui, après évaporation du solvant, permet de conférer une rugosité de surface au filtre. La solution de mouillage comprend un copolymère d'éthylène et de propylène dissous dans un solvant à base de xylol.

US 2004/213918 A1 décrit un procédé de fluoration d'un substrat, dans lequel le substrat poreux est pré-traité dans un champ de plasma et un monomère acrylate de fluor fonctionnalisant est immédiatement évaporé, déposé et durci sur le substrat poreux dans une chambre de dépôt sous vide.

Les documents **[1]** à **[3]** mentionnés ci-dessus proposent donc de renforcer les propriétés hydrophobes du filtre d'un embout de pipette, notamment lorsque le filtre est en polyoléfine, par la réalisation d'un revêtement hydrophobe au niveau de la surface de la structure solide poreuse du filtre, voire dans la structure poreuse du filtre elle-même.

Toutefois, la réalisation d'un tel revêtement hydrophobe à la surface ou dans la structure solide poreuse des filtres d'embouts de pipette consiste en un ajout de matière. Or, en plus d'alourdir les procédés de fabrication des filtres associés, cet ajout de matière crée des interfaces entre la structure solide poreuse et le revêtement, avec le risque potentiel de délamination ultérieure au niveau de ces interfaces.

En outre, que ce revêtement hydrophobe se trouve en surface ou dans la structure poreuse formant le filtre, il persiste un risque non négligeable de relargage des molécules formant ce revêtement hydrophobe dans les prélèvements, dans l'hypothèse où ces prélèvements viendraient à se trouver en contact avec le filtre. Un tel relargage peut s'avérer particulièrement problématique : à titre d'exemple, un filtre poreux en polyéthylène traité par un silicone, comme décrit dans le document **[1],** peut relarguer du silicone, qui est un composé connu comme un agent polluant des appareils d'analyse et, partant, des spectres d'analyse.

Le but de l'invention est, par conséquent, de pallier les inconvénients de l'art antérieur et de proposer un embout de pipette comprenant un filtre formé par une structure solide poreuse en polyoléfine, ce filtre étant caractérisé par des propriétés hydrophobes remarquables et ce, sans risque de délamination et/ou de relargage de molécules dans le cas où le filtre viendrait à se trouver en contact avec un prélèvement.

Un autre but de l'invention consiste à proposer un procédé de traitement qui permette de conférer au filtre ces propriétés hydrophobes remarquables, ce procédé comprenant un nombre limité d'étapes et dont le coût industriel est limité. Ce procédé de traitement doit, en outre, pouvoir être facilement intégré aux procédés actuels de fabrication des filtres en polyoléfine.

### EXPOSÉ DE L'INVENTION

Ces buts précédemment énoncés sont atteints, en premier lieu, par un procédé de fluoration d'un filtre d'embout de pipette, ce filtre étant formé par une structure solide poreuse en polyoléfine.

Selon l'invention, ce procédé de fluoration comprend les étapes suivantes :
(a) une mise en place du filtre dans une enceinte,
(b) une mise sous vide de l'enceinte,
(c) une mise en contact du filtre avec un agent de fluoration introduit à l'état gazeux dans l'enceinte, et, de manière optionnelle,
(d) une élimination des sous-produits formés lors de l'étape (c),
cet agent de fluoration étant constitué par du difluor F₂, le difluor F₂ étant introduit dans l'enceinte à une pression partielle comprise entre 100 Pa et 10000 Pa, l'étape (c) étant conduite à une température comprise entre 0 °C et 100 °C.

Les Inventeurs ont constaté que la mise en œuvre des étapes (a) à (c), ou (a) à (d), combinant notamment l'introduction, dans une enceinte sous vide, de difluor F₂ comme seul agent de fluoration, à une pression partielle comprise entre 100 Pa et 10000 Pa et dans des conditions telles que la température, dans l'enceinte, est comprise entre 0 °C et 100 °C, permet la rupture de liaisons C-H de la polyoléfine au profit de la formation de liaisons C-F, et ainsi de remplacer, par des atomes de fluor, au moins une partie, voire la totalité, des atomes d'hydrogène de la polyoléfine qui se situent au niveau de la surface externe de la structure solide poreuse formant le filtre.

Ce faisant, les propriétés hydrophobes du filtre ne lui sont pas conférées par un ajout de matière et/ou de molécules, comme c'est le cas dans chacun des documents [1] à [3], mais par la formation d'un gradient continu d'atomes de fluor qui remplacent les atomes d'hydrogène de la polyoléfine, ce gradient continu d'atomes de fluor s'inscrivant dans l'épaisseur de la structure solide poreuse, en quantité décroissante à partir de la surface externe vers le cœur de la structure solide poreuse en polyoléfine.

Le procédé de fluoration selon l'invention est de mise en œuvre industrielle relativement aisée et à un coût maîtrisé, dans le sens où seule une faible quantité de fluor est nécessaire pour fluorer une quantité importante de filtres en polyoléfine.

Les liaisons ainsi formées entre les atomes de fluor provenant de l'agent de fluoration et les atomes de carbone de la polyoléfine sont des liaisons de nature covalente. Comme les liaisons covalentes C-F se caractérisent par une énergie de liaison de 490 kJ.mol⁻¹ qui est supérieure à l'énergie de liaison des liaisons covalentes C-H qui s'établit entre 402 kJ.mol⁻¹ et 414 kJ.mol⁻¹, ces liaisons C-F sont particulièrement stables. En conséquence, dans le cas où le filtre traité par le procédé de fluoration selon l'invention viendrait à se trouver en contact avec un échantillon prélevé, il n'y a aucun risque de délamination et/ou de contamination de cet échantillon par relargage d'atomes de fluor dans ce dernier.

De surcroît, la mise en œuvre du procédé de fluoration selon l'invention permet de conserver la morphologie initiale présentée par la structure solide poreuse en polyoléfine, en particulier sa porosité initiale, d'autant plus que le rayon atomique des atomes de fluor et d'hydrogène (de 50 pm et 25 pm, respectivement), d'une part, et la longueur des liaisons covalentes C-F et C-H (de 1,35 Å et de 1,07 Å), d'autre part, sont d'un même ordre de grandeur.

Le procédé de fluoration selon l'invention permet donc de réaliser une fluoration, par substitution d'atomes de fluor à des atomes d'hydrogène de la polyoléfine formant la structure solide poreuse du filtre d'embout de pipette.

Le procédé de fluoration selon l'invention présente également l'avantage de pouvoir être appliqué à tout type de filtres en polyoléfine, quelles que soient leurs formes.

Bien qu'il n'y ait pas de réelle limitation quant au choix de la polyoléfine formant le filtre, celle-ci est plus particulièrement choisie parmi un polyéthylène et un polypropylène.

De manière avantageuse, la polyoléfine formant le filtre est un polyéthylène.

En plus d'être de mise en œuvre aisée et rapide, le procédé de fluoration selon l'invention ne comprend que peu d'étapes et présente, en outre, l'avantage d'être peu consommateur d'énergie.

Le procédé selon l'invention comprend une étape (a) consistant à mettre en place le filtre dans une enceinte en vue de sa fluoration. Cette mise en place peut aussi bien être manuelle qu'automatisée.

Après fermeture de l'enceinte, on procède à une étape (b) consistant à mettre cette enceinte sous vide de manière à éliminer l'oxygène et l'eau (humidité) présents dans le volume de l'enceinte ainsi que dans les pores de la structure solide poreuse en polyoléfine formant le filtre. Cette étape (b) permet d'éviter l'oxyfluoration de la polyoléfine qui aurait un effet contraire à l'effet hydrophobe recherché.

Selon une variante particulière, l'étape (b) est réalisée de manière à atteindre, dans l'enceinte, une pression inférieure ou égale à 100 Pa, avantageusement inférieure ou égale à 50 Pa et, préférentiellement, inférieure ou égale à 10 Pa.

Selon une variante avantageuse du procédé de fluoration selon l'invention, le difluor F₂ est introduit dans l'enceinte à une pression partielle comprise entre 500 Pa et 8000 Pa et, préférentiellement, entre 750 Pa et 6000 Pa.

Selon une autre variante avantageuse du procédé de fluoration selon l'invention, l'étape (c) de mise en contact du filtre avec le difluor est conduite à une température, dans l'enceinte, comprise entre 10 °C et 60 °C et, préférentiellement, entre 15 °C et 25 °C.

Selon une variante du procédé de fluoration selon l'invention, l'étape (c) de mise en contact du filtre avec le difluor est réalisée pendant une durée comprise entre 1 min et 60 min.

Dans une variante avantageuse, cette durée de mise en contact peut être comprise entre 2 min et 45 min, préférentiellement entre 5 min et 45 min et, plus préférentiellement, entre 10 min et 30 min.

La durée de l'étape (c) peut effectivement être limitée, dans le sens où de remarquables propriétés hydrophobes sont conférées au filtre en polyoléfine à partir du moment où les atomes de fluor substituent pour le moins une partie des atomes d'hydrogène de la polyoléfine qui se situent au niveau de la surface externe de la structure solide poreuse. Une substitution des atomes de fluor aux atomes d'hydrogène qui serait conduite à cœur est bien entendu envisageable, mais n'est pas nécessaire : en effet, la substitution des atomes de fluor aux atomes d'hydrogène initialement présents au niveau de la surface externe de la structure solide poreuse en polyoléfine se suffit à elle seule, le greffage des atomes de fluor conférant un caractère hydrophobe à la structure solide poreuse ainsi modifiée par le procédé de fluoration selon l'invention.

Les Inventeurs ont pu montrer qu'une substitution partielle d'atomes de fluor aux atomes d'hydrogène de la polyoléfine réalisée sur une profondeur inférieure à 2 µm permet d'obtenir de telles propriétés hydrophobes.

Selon une variante du procédé de fluoration selon l'invention, lors de l'étape (c) de mise en contact du filtre avec le difluor, on introduit un nombre de moles de difluor supérieur ou égal au nombre équivalent de moles d'atomes d'hydrogène de la polyoléfine.

Le nombre équivalent de moles d'atomes d'hydrogène de la polyoléfine est calculé en prenant en compte la surface de la polyoléfine poreuse qui est accessible au gaz, modulée par sa densité et pour une profondeur de diffusion du difluor donnée.

Étant donné que la porosité de la polyoléfine peut être variable selon sa méthode d'élaboration, une détermination de la surface accessible au gaz est nécessaire : elle peut être basée sur des données de microscopie ou par une technique volumétrique comme l'adsorption de gaz ou la pycnométrie à hélium. Cette valeur de surface accessible au gaz est ensuite modulée par la profondeur de diffusion du difluor qui peut être estimée par une technique microscopique ou spectroscopique selon la structure poreuse de la polyoléfine ; on obtient ainsi un volume de polyoléfine susceptible d'être exposé au traitement. Le nombre de moles d'atomes d'hydrogène est ensuite déduit par comparaison avec la densité que l'on détermine pour une même polyoléfine mais ne présentant pas de structure poreuse et dont on connaît le nombre d'atomes d'hydrogène par unité formulaire.

Selon une variante avantageuse, ce nombre de moles de difluor est supérieur ou égal à 5 fois et, préférentiellement, à 10 fois le nombre équivalent de moles d'atomes d'hydrogène de la polyoléfine.

Compte tenu des conditions particulières de pression partielle de l'agent de fluoration et de température mises en œuvre et du choix de l'agent de fluoration, le sous-produit de réaction qui se forme, lors de l'étape (c) de mise en contact du filtre avec le difluor à l'état gazeux, est essentiellement du fluorure d'hydrogène HF. En particulier, il est à noter qu'il se forme peu de composés perfluorocarbonés volatils du type tétrafluorométhane CF₄ ou encore hexafluoroéthane C₂F₆, qui sont des composés connus pour modifier sensiblement la porosité des structures solides poreuses. En d'autres termes, le procédé de fluoration selon l'invention ne fait pas perdre sa morphologie initiale au filtre.

Selon un premier mode de mise en œuvre, le procédé de fluoration selon l'invention peut ne comprendre que les étapes (a) à (c).

Selon un second mode de mise en œuvre, le procédé de fluoration selon l'invention peut également comprendre une ou plusieurs étapes additionnelles.

Selon une première variante de ce second mode de mise en œuvre, le procédé de fluoration selon l'invention peut avantageusement comprendre une étape (d) consistant à éliminer les sous-produits de réaction qui se sont formés lors de l'étape (c) et qui sont à l'état gazeux.

Cette étape (d) d'élimination peut être réalisée par voie chimique, notamment par piégeage chimique des sous-produits de réaction au moyen d'un piège disposé dans l'enceinte ou à l'extérieur de celle-ci et connectée à cette dernière. Un tel piège est classiquement formé par un composé (par exemple, un sel de fluor) ou une composition chimique hygroscopique qui est choisi(e) de manière à ne réagir qu'avec les sous-produits (notamment HF) et à ne pas être dégradé par le difluor.

Cette étape (d) d'élimination peut également être réalisée par voie physique, c'est-à-dire par une élimination directe des sous-produits gazeux et, notamment, par pompage ou dégazage, avantageusement par dégazage sous vide, de ces sous-produits.

Les étapes (c) et (d) peuvent être réalisées concomitamment de manière à éliminer les sous-produits formés au fur et à mesure de leur formation, parmi lesquels le fluorure d'hydrogène HF. C'est notamment le cas lorsque l'étape (d) d'élimination des sous-produits formés est réalisée par piégeage chimique.

De façon plus particulièrement avantageuse, les étapes (c) et (d) sont réalisées successivement, l'étape (d) d'élimination des sous-produits formés étant réalisée au terme de l'étape (c) de mise en contact.

Selon une deuxième variante de ce second mode de mise en œuvre, le procédé de fluoration selon l'invention peut avantageusement comprendre une étape (e₁) de mise sous vide de l'enceinte suivie d'une étape (e₂) de mise en contact du filtre avec du dihydrogène ou un mélange comprenant du dihydrogène, le dihydrogène ou le mélange comprenant du dihydrogène étant introduit à l'état gazeux dans l'enceinte.

La mise en œuvre d'une telle étape (e₂) permet de stabiliser la structure solide poreuse du filtre tel qu'obtenu par le procédé de fluoration selon l'invention. En effet, la mise en contact du filtre avec du dihydrogène permet de stabiliser d'éventuelles liaisons, dites pendantes ou libres, qui pourraient s'être formées lors de l'étape (c), suite à la rupture de liaisons C-H et à l'absence de remplacement, sur ces liaisons rompues, de l'atome d'hydrogène par un atome de fluor, notamment pour des raisons d'encombrement stérique. La mise en œuvre de l'étape (e₂) permet donc de reformer des liaisons C-H au niveau de ces liaisons pendantes ou libres de manière à éviter que ces dernières ne réagissent, par exemple, avec l'oxygène de l'air lors de l'ouverture de l'enceinte pour former des liaisons hydroxyle et/ou carboxyle qui viendraient diminuer les propriétés hydrophobes du filtre.

Les étapes (e₁) de mise sous vide et (e₂) de mise en contact du filtre avec du dihydrogène ou un mélange comprenant du dihydrogène peuvent être mises en œuvre que le procédé de fluoration selon l'invention comprenne, ou au contraire ne comprenne pas, l'étape (d) d'élimination des sous-produits formés lors de l'étape (c).

Ces étapes (e₁) puis (e₂) sont réalisées directement après l'étape (c) lorsque le procédé selon l'invention ne comprend pas d'étape (d) ou bien lorsque ce procédé comprend une étape (d) et que ces étapes (c) et (d) sont concomitantes. Dans le cas où le procédé selon l'invention comprend une étape (d) et que les étapes (c) et (d) ne sont pas concomitantes mais sont réalisées successivement, les étapes (e₁) puis (e₂) sont mises en œuvre après l'étape (d).

Selon une variante particulière, l'étape (e₁) est réalisée dans les mêmes conditions que l'étape (b) décrite ci-dessus de manière à atteindre, dans l'enceinte, une pression inférieure ou égale à 100 Pa, avantageusement inférieure ou égale à 50 Pa et, préférentiellement, inférieure ou égale à 10 Pa.

Lors de l'étape (e₂), le dihydrogène, ou le mélange comprenant du dihydrogène, est introduit à l'état gazeux dans l'enceinte.

Selon un mode de réalisation particulier, le mélange comprenant du dihydrogène est un mélange de dihydrogène et d'azote. Dans une variante avantageuse, le pourcentage volumique de dihydrogène, dans le mélange formé par le dihydrogène et l'azote, est supérieur ou égal à 2 % vol et est, préférentiellement, compris entre 5 % vol et 20 % vol.

Selon un autre mode de réalisation, lors de l'étape (e₂), on introduit un nombre de moles de dihydrogène inférieur ou égal au nombre de moles de difluor qui ont été introduites dans l'enceinte lors de l'étape (c).

Selon un autre mode de réalisation, l'étape (e₂) de mise en contact du filtre avec le dihydrogène ou le mélange comprenant du dihydrogène est réalisée pendant une durée comprise entre 10 min et 2 h.

Dans une variante avantageuse, la durée de mise en contact de l'étape (e₂) peut être comprise entre 30 min et 60 min.

Selon une autre mode de réalisation, l'étape (e₂) est conduite à une température comprise entre 0 °C et 200 °C et, préférentiellement, entre 20 °C et 80 °C.

Selon une variante avantageuse du procédé selon l'invention, l'étape (c), au cours de laquelle se produit le remplacement des atomes d'hydrogène par des atomes de fluor, est contrôlée par spectroscopie infrarouge.

En effet, par spectroscopie infrarouge, il est possible d'obtenir les spectres d'absorbance des différents groupements qui sont en présence lors de l'étape (c) de mise en contact du filtre en polyoléfine avec le difluor et, plus particulièrement, les groupements -CH₂-, -CHF et -CF₂-. Ainsi, le suivi de l'évolution du rapport (noté A_{CH₂} /A_{CFₓ}) de l'aire des bandes de vibration infrarouge correspondant aux groupements -CH₂- (notée A_{CH₂}) sur la somme des aires des bandes de vibration infrarouge correspondant aux groupements -CHF- (notée ACHF), d'une part, et aux groupements -CF₂- (notée ACF2), d'autre part, la somme de ces aires étant notée A_{CFₓ}, avec A_{CFₓ} = A_{CHF} + ACF₂, permet de suivre l'évolution de la fluoration de la structure solide poreuse en polyoléfine formant le filtre.

Dans une variante avantageuse du procédé de fluoration selon l'invention, l'étape (c) de mise en contact du filtre avec le difluor peut être stoppée dès lors que ce rapport d'aires A_{CH₂}/A_{CFₓ}, atteint une valeur inférieure ou égale à 15, avantageusement inférieure ou égale à 6 et, préférentiellement, inférieure ou égale à 3.

La présente invention se rapporte, en deuxième lieu, à un procédé de fabrication d'un embout de pipette comprenant un filtre fluoré.

Selon l'invention, ce procédé comprend les étapes suivantes :
(i) une fourniture d'un filtre formé par une structure solide poreuse en polyoléfine,
(ii) une mise en place du filtre dans l'embout de la pipette, et
(iii) une fluoration du filtre par la mise en œuvre du procédé de fluoration tel que défini ci-dessus.

Si, bien entendu, l'étape (i) de fourniture du filtre est réalisée en premier lieu, les étapes (ii) et (iii) du procédé de fabrication peuvent être ensuite réalisées dans un ordre quelconque.

En d'autres termes, ce procédé de fabrication d'un embout de pipette selon l'invention peut être réalisé selon les séquences d'étapes décrites ci-après.

Selon une première séquence, après l'étape (i), on réalise l'étape (ii) de mise en place du filtre formé par une structure solide poreuse en polyéthylène dans l'embout, puis l'étape (iii) de fluoration de ce filtre placé dans l'embout.

Selon une deuxième séquence, après l'étape (i), on réalise l'étape (iii) de fluoration du filtre formé par une structure solide poreuse en polyéthylène, puis l'étape (ii) de mise en place du filtre fluoré dans l'embout.

Quelle que soit la séquence retenue, l'étape (iii) de fluoration du filtre est réalisée par la mise en œuvre du procédé de fluoration qui a été précédemment décrit, les caractéristiques relatives aux étapes (a) à (c) ainsi qu'aux étapes optionnelles (d), (e₁) et (e₂) de ce procédé pouvant être prises seules ou en combinaison.

Ainsi, quelle que soit la séquence retenue, le procédé de fabrication selon l'invention permet d'obtenir un embout de pipette muni d'un filtre dont la structure solide poreuse, initialement en polyoléfine, a été modifiée par le remplacement d'au moins une partie des atomes d'hydrogène de la polyoléfine par des atomes de fluor.

Comme indiqué précédemment, il n'y a pas de réelle limitation quant au choix de la polyoléfine formant le filtre. Toutefois, la polyoléfine est plus particulièrement choisie parmi un polyéthylène et un polypropylène. De manière avantageuse, la polyoléfine formant la structure solide poreuse du filtre est un polyéthylène.

L'embout de pipette peut également être en polyoléfine, par exemple en polypropylène.

La présente invention se rapporte, en troisième lieu, à un embout de pipette comprenant un filtre.

Selon l'invention, le filtre de cet embout de pipette est formé par une structure solide poreuse en polyoléfine, en particulier en polyéthylène, dans laquelle des atomes de fluor remplacent des atomes d'hydrogène de la polyoléfine par la mise en œuvre du procédé de fluoration tel que défini ci-dessus.

Le filtre d'embout de pipette selon l'invention présente de remarquables propriétés hydrophobes. Au demeurant, même si ce filtre venait à se trouver en contact avec un prélèvement, la partie de prélèvement qui aurait pu éventuellement venir combler les pores de la structure solide poreuse formant le filtre pourra être recollectée, sans risque de souillure ou contamination, par relargage de molécules provenant du filtre.

De plus, ce filtre conservant sa morphologie d'avant traitement par le procédé de fluoration selon l'invention, il peut équiper tout type d'embouts de pipette, sans contrainte quant au volume à prélever.

Un tel filtre peut bien entendu équiper d'autres dispositifs pour lesquels une protection contre l'humidité, par exemple, est recherchée.

À titre d'exemples de tels dispositifs, on peut citer les capteurs ainsi que les micro-capteurs de gaz, le gaz pouvant être choisi parmi l'ozone, le dioxyde d'azote, le monoxyde d'oxygène, l'ammoniac et le sulfure d'hydrogène.

La présente invention se rapporte, en quatrième lieu, à une pipette de prélèvement.

Selon l'invention, cette pipette de prélèvement comprend un embout tel que défini ci-dessus, c'est-à-dire un embout de pipette comprenant un filtre formé par une structure solide poreuse en polyoléfine, en particulier en polyéthylène, dans laquelle des atomes de fluor remplacent des atomes d'hydrogène de la polyoléfine par la mise en œuvre du procédé de fluoration tel que défini ci-dessus.

Une telle pipette de prélèvement peut être du type "monocanal" et ainsi ne comprendre qu'un seul embout emmanché à son extrémité inférieure. Elle peut également être "multicanaux" et ainsi comprendre plusieurs embouts emmanchés à son extrémité inférieure qui est adaptée pour ce faire.

Cette pipette de prélèvement peut être une pipette mécanique à actionnement manuel ou motorisé ou bien encore une pipette automatisée ou automate (robot) de pipetage.

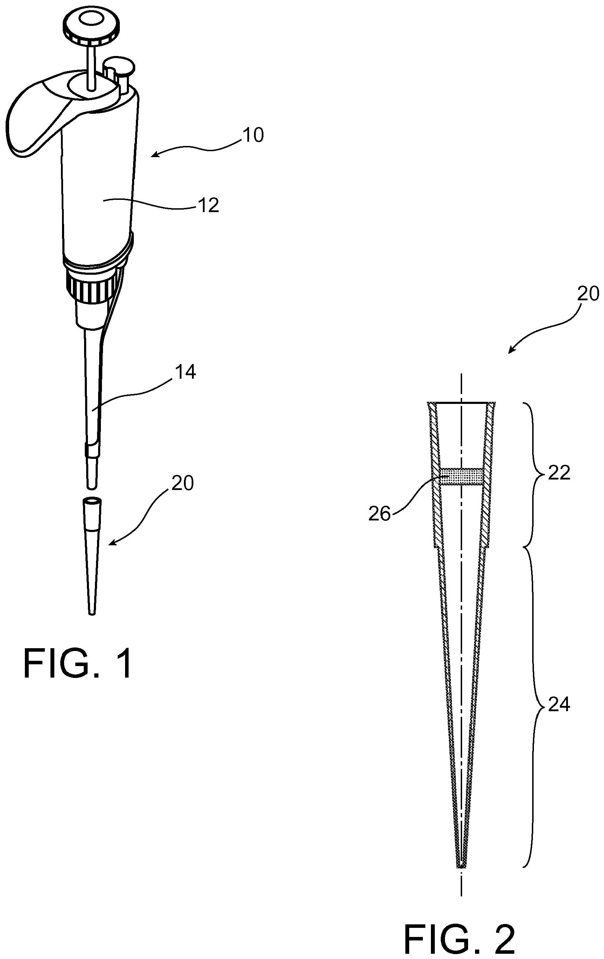

D'autres caractéristiques et avantages de la présente invention apparaîtront à la lecture du complément de description qui suit, qui est fait en référence aux figures 1 à 4 annexées, et qui se rapporte à des modes de réalisation particuliers de l'invention.

Bien entendu, ces modes de réalisation particuliers de l'invention ne sont donnés qu'à titre d'illustration de l'objet de l'invention et ne constituent, en aucun cas, une limitation de cet objet.

### BRÈVE DESCRIPTION DES DESSINS

La figure 1 est une représentation schématique en élévation et éclatée d'une pipette de prélèvement à l'extrémité de laquelle est destiné à être emmanché un embout de pipette conforme à l'invention.
La figure 2 est une représentation schématique en coupe de l'embout de pipette représenté à la figure 1.
La figure 3A illustre les spectres d'absorbance traduisant l'évolution de l'absorbance (notée A et exprimée sans unité) en fonction du nombre d'onde (noté v et exprimé en cm⁻¹) tels qu'obtenus, avec la mise en œuvre du procédé de fluoration d'un filtre d'embout de pipette conforme à l'invention, ce procédé étant conduit à trois valeurs distinctes de pression partielle de difluor.
La figure 3B est un agrandissement de l'aire totale, notée A_{CFₓ}, correspondant à la somme de l'aire des bandes de vibration infrarouge correspondant aux groupements -CHF- et de l'aire des bandes de vibration infrarouge correspondant aux groupements -CF₂-.
La figure 4 illustre l'évolution d'une goutte d'eau déposée sur deux filtres en polyéthylène, l'un non traité (figure 4A) et l'autre traité par le procédé de fluoration selon l'invention (figure 4B), sur une durée de 5 min.

Il est précisé que les éléments communs aux figures 1 et 2 sont repérés par une même référence numérique.

### EXPOSÉ DÉTAILLÉ DE MODES DE RÉALISATION PARTICULIERS

On a représenté, sur la figure 1, une pipette de prélèvement 10 destinée à recevoir un embout 20 de pipette conforme à l'invention. Cette pipette de prélèvement 10 peut notamment être une pipette à déplacement d'air, manuelle ou motorisée.

Cette pipette 10 comprend une partie supérieure formant poignée 12 et une partie basse 14 destinée à recevoir un embout, ou cône, de pipette 20 représenté en coupe longitudinale sur la figure 2.

Sur la représentation de la figure 1, un seul embout 20 est destiné à être fixé à la pipette de prélèvement 10, dite pipette "monocanal".

Bien entendu, rien n'interdit d'envisager que plusieurs embouts puissent être simultanément fixés à une pipette de prélèvement dite "multicanaux" (non représentée).

En se référant à la figure 2, on observe que l'embout 20 présente une forme effilée, qui se rétrécit depuis sa partie supérieure 22 vers sa partie inférieure 24 qui correspond à la partie de l'embout 20 qui est destinée à être plongée dans la solution à prélever.

L'embout 20 est classiquement réalisé en polyoléfine et, plus particulièrement, en polypropylène.

L'embout 20 comprend, dans sa partie supérieure 22, un filtre 26 disposé radialement. Ce filtre 26 est formé par une structure solide poreuse en polyoléfine, de préférence en polyéthylène.

Ce filtre 26 présente des propriétés hydrophobes améliorées, obtenues grâce à la mise en œuvre du procédé de fluoration conforme à l'invention.

Le procédé de fluoration conforme à l'invention a été conduit dans les conditions opératoires suivantes.

Des filtres en polyéthylène ont été placés dans une enceinte. Après fermeture de l'enceinte, on a successivement réalisé, dans cette même enceinte, un vide de l'ordre de 10 Pa avant d'y introduire du difluor, à différentes pressions partielles, en l'espèce à 1000 Pa, à 3000 Pa et à 5000 Pa.

Les réactions de fluoration ont été conduites à la température ambiante, typiquement à 20 °C, et ont été contrôlées par spectroscopie infrarouge.

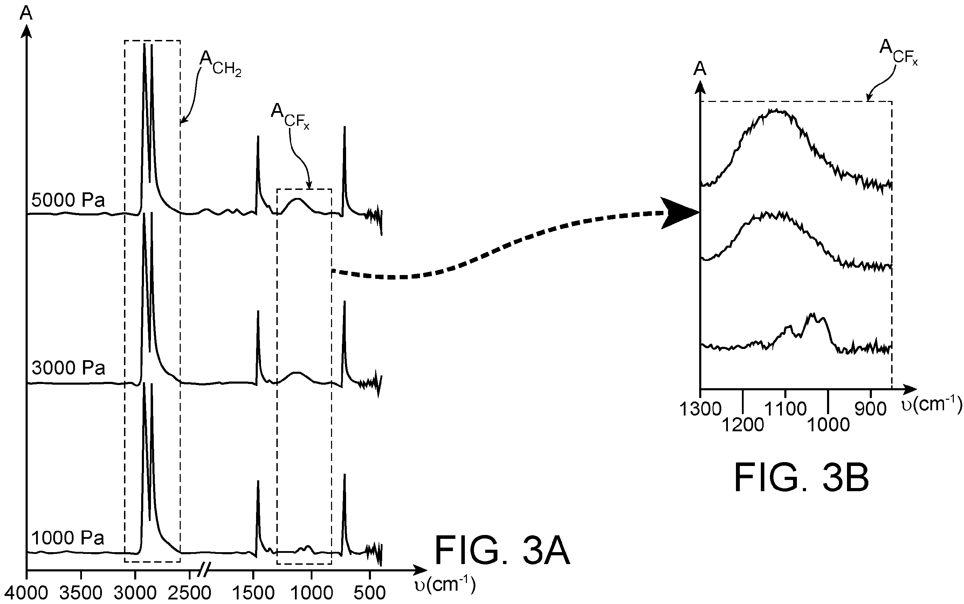

On peut se reporter à la figure 3A qui illustre les spectres d'absorbance tels qu'obtenus, après une mise en contact de 30 min du filtre avec le difluor, en fonction de la pression partielle de difluor appliquée.

Sur la figure 3A, les bandes de vibration infrarouge correspondant aux groupements -CH₂- se situent dans un intervalle de nombre d'onde compris entre 3000 cm⁻¹ et 2600 cm⁻¹ tandis que les bandes de vibration infrarouge correspondant aux groupements -CHF- et -CF₂- se situent dans un intervalle de nombre d'onde compris entre 1300 cm⁻¹ et 900 cm⁻¹.

Le Tableau 1 ci-dessous fait état du rapport, noté A_{CH₂} / A_{CFₓ} entre :
- l'aire des bandes de vibration infrarouge correspondant aux groupements -CH₂-, notée ACH₂ sur la figure 3A, et
- la somme des aires des bandes de vibration infrarouge correspondant aux groupements -CHF- et -CF₂-, notée A_{CFₓ} sur les figures 3A et 3B.

**Tableau 1**

| Pression partielle de difluor appliquée (Pa) | A_{CH₂} / A_{CFₓ} |
|---|---|
| 5000 | 2,63 |
| 3000 | 5,38 |
| 1000 | 12,0 |

On observe que, pour une même durée de mise en contact, on obtient un taux de remplacement des atomes d'hydrogène par des atomes de fluor d'autant plus élevée que la pression partielle de difluor est plus élevée.

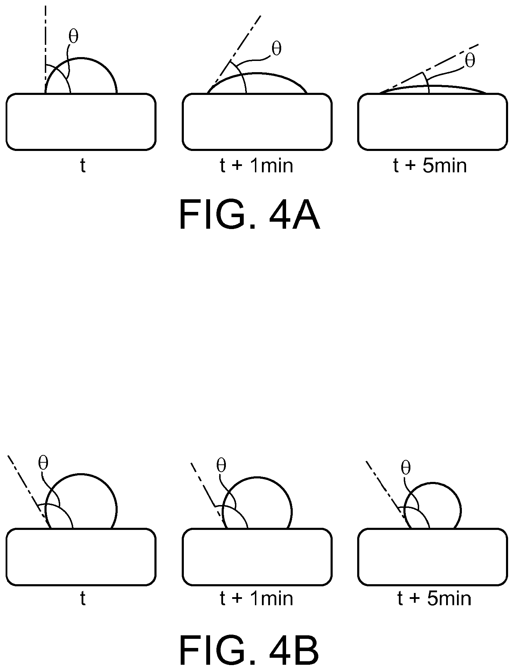

La figure 4 illustre le comportement d'une goutte d'eau déposée à la surface de deux filtres en polyéthylène, le premier filtre n'ayant pas été traité (figure 4A) et le second filtre ayant été traité par le procédé de fluoration selon l'invention décrit ci-dessus en lien avec les figures 3A et 3B et conduit à la pression partielle de difluor de 3000 Pa (figure 4B).

En référence à la figure 4A, on observe que l'angle de contact θ, qui est de l'ordre de 90° lorsque la goutte d'eau est déposée, diminue au cours du temps, signifiant que la surface externe du filtre en polyéthylène non traité révèle des propriétés de mouillabilité et, qu'en conséquence, l'eau pénètre à l'intérieur de la structure poreuse de ce filtre sous l'influence de son propre poids.

*A contrario,* à la figure 4B, on observe que l'angle de contact θ reste à une valeur supérieure à 90° pendant les 5 min d'observation, ce qui signifie que l'eau ne pénètre pas dans la porosité du filtre en polyéthylène traité par le procédé de fluoration selon l'invention. Le filtre fluoré conserve donc ses propriétés hydrophobes sur cette même durée.

### BIBLIOGRAPHIE

[1] EP 0 631 817 A1
**[2]** US 2004/0028890 A1
**[3]** US 2012/0009100 A1

## Revendications

1. Procédé de fluoration d'un filtre (26) d'embout (20) de pipette, ce filtre (26) étant formé par une structure solide poreuse en polyoléfine, la polyoléfine étant notamment choisie parmi un polyéthylène et un polypropylène et étant avantageusement un polyéthylène, **caractérisé en ce qu'**il comprend les étapes suivantes :
(a) une mise en place du filtre (26) dans une enceinte,
(b) une mise sous vide de l'enceinte, et
(c) une mise en contact du filtre (26) avec un agent de fluoration introduit à l'état gazeux dans l'enceinte,
**en ce que** l'agent de fluoration est constitué par du difluor F₂,
**en ce que** le difluor F₂ est introduit dans l'enceinte à une pression partielle comprise entre 100 Pa et 10000 Pa, avantageusement entre 500 Pa et 8000 Pa et, préférentiellement, entre 750 Pa et 6000 Pa, et
**en ce que** l'étape (c) est conduite à une température comprise entre 0 °C et 100 °C, avantageusement entre 10 °C et 60 °C et, préférentiellement, entre 15 °C et 25 °C.

2. Procédé de fluoration selon la revendication 1, dans lequel l'étape (c) est réalisée pendant une durée comprise entre 1 min et 60 min, avantageusement entre 2 min et 45 min, préférentiellement entre 5 min et 45 min et, plus préférentiellement, entre 10 min et 30 min.

3. Procédé de fluoration selon la revendication 1 ou 2, dans lequel, lors de l'étape (c), on introduit un nombre de moles de difluor supérieur ou égal au nombre équivalent de moles d'atomes d'hydrogène de la polyoléfine, ce nombre de moles de difluor étant avantageusement supérieur ou égal à 5 fois et, préférentiellement, à 10 fois le nombre équivalent de moles d'atomes d'hydrogène de la polyoléfine.

4. Procédé de fluoration selon l'une quelconque des revendications 1 à 3, comprenant en outre une étape (d) d'élimination des sous-produits formés lors de l'étape (c).

5. Procédé de fluoration selon la revendication 4, dans lequel l'étape (d) est réalisée par dégazage, avantageusement par dégazage sous vide, des sous-produits formés lors de l'étape (c).

6. Procédé de fluoration selon la revendication 4 ou 5, dans lequel les étapes (c) et (d) sont réalisées successivement.

7. Procédé de fluoration selon la revendication 4, dans lequel l'étape (d) est réalisée par piégeage chimique des sous-produits formés lors de l'étape (c).

8. Procédé de fluoration selon l'une quelconque des revendications 1 à 7, comprenant en outre, après l'étape (c) ou, le cas échéant, après l'étape (d), une étape (e₁) de mise sous vide de l'enceinte suivie d'une étape (e₂) de mise en contact du filtre avec du dihydrogène ou un mélange comprenant du dihydrogène, le dihydrogène ou le mélange comprenant du dihydrogène étant introduit à l'état gazeux dans l'enceinte, le nombre de moles de dihydrogène introduit, lors de l'étape (e₂), étant avantageusement inférieur ou égal au nombre de moles de difluor introduites lors de l'étape (c).

9. Procédé de fluoration selon la revendication 8, dans lequel le mélange comprend du dihydrogène et de l'azote, le pourcentage volumique de dihydrogène dans ce mélange étant avantageusement supérieur ou égal à 2% vol et, préférentiellement, compris entre 5 % vol et 20 % vol.

10. Procédé de fluoration selon la revendication 8 ou 9, dans lequel l'étape (e₂) est réalisée pendant une durée comprise entre 10 min et 2 h et, avantageusement, entre 30 min et 60 min et/ou est conduite à une température comprise entre 0 °C et 200 °C et, préférentiellement, entre 20 °C et 80 °C.

11. Procédé de fluoration selon l'une quelconque des revendications 1 à 10, dans lequel, lors de l'étape (b) et, le cas échéant, lors de l'étape (e₁), la pression dans l'enceinte est inférieure ou égale à 100 Pa, avantageusement inférieure ou égale à 50 Pa et, préférentiellement, inférieure ou égale à 10 Pa.

12. Procédé de fluoration selon l'une quelconque des revendications 1 à 11, dans lequel l'étape (c) est contrôlée par spectroscopie infrarouge, en particulier par le suivi de l'évolution du rapport A_{CH₂} / A_{CFₓ} de l'aire des bandes de vibration infrarouge correspondant aux groupements -CH₂- sur la somme des aires des bandes de vibration infrarouge correspondant aux groupements -CHF- et aux groupements -CF₂-, l'étape (c) pouvant notamment être stoppée dès lors que ce rapport A_{CH₂} / A_{CFₓ} atteint une valeur inférieure ou égale à 15, avantageusement inférieure ou égale à 6 et, préférentiellement, inférieure ou égale à 3.

13. Procédé de fabrication d'un embout (20) de pipette comprenant un filtre (26) fluoré, le procédé comprenant les étapes suivantes :
(i) une fourniture d'un filtre (26) formé par une structure solide poreuse en polyoléfine, en particulier en polyéthylène,
(ii) une mise en place du filtre (26) dans l'embout de la pipette, et
(iii) une fluoration du filtre (26) par la mise en œuvre du procédé de fluoration selon l'une quelconque des revendications 1 à 12.

14. Embout (20) de pipette comprenant un filtre (26), **caractérisé en ce que** le filtre (26) est formé par une structure solide poreuse en polyoléfine, en particulier en polyéthylène, dans laquelle des atomes de fluor remplacent au moins une partie des atomes d'hydrogène de la polyoléfine par la mise en œuvre du procédé de fluoration selon l'une quelconque des revendications 1 à 12.

15. Pipette de prélèvement (10) comprenant un embout (20) de pipette selon la revendication 14.

## Patentansprüche

1. Verfahren zum Fluorieren eines Filters (26) für Pipettenspitzen Polyethylen und einem Polypropylen ausgewählt ist und es sich dabei insbesondere um ein Polyethylen handelt, **dadurch gekennzeichnet, dass** es die folgenden Schritte umfasst:
(a) Bereitstellen des Filters (26) in einem Hohlraum,
(b) Anlegen eines Vakuums an den Hohlraum und
(c) Inkontaktbringen des Filters (26) mit einem Fluorierungsmittel, welches im gasförmigen Zustand in den Hohlraum eingeleitet wird,
dadurch, dass das Fluorierungsmittel aus Difluor F2 besteht, dadurch, dass das Difluor F2 mit einem Partialdruck im Bereich von 100 Pa und 10 000 Pa, vorteilhafterweise von 500 Pa bis 8.000 Pa, und vorzugsweise von 750 Pa bis 6.000, in den geschlossenen Raum eingeleitet wird, und
dadurch, dass der Schritt (c) bei einer Temperatur im Bereich von 0 °C bis 100 °C, vorteilhafterweise von 10 bis 60 °C,
vorzugsweise von 15 °C bis 25 °C, durchgeführt wird.

2. Fluorierungsverfahren nach Anspruch 1, wobei der Schritt (c) über eine Zeitdauer durchgeführt wird, die im Bereich von 1 min. bis 60 min., vorteilhafterweise von 2 min. bis 45 min., vorzugsweise von 5 min. bis 45 min., stärker bevorzugt von 10 min. bis 30 min. liegt.

3. Fluorierungsverfahren nach Anspruch 1 oder 2, wobei während des Schrittes (c) eine Molanzahl an Difluor eingeleitet wird, die mindestens gleich der entsprechenden Molanzahl an Wasserstoffatomen des Polyolefins ist, wobei diese Molanzahl an Difluor vorteilhafterweise mindestens gleich dem 5-fachen und vorzugsweise gleich dem 10-fachen der entsprechenden Molanzahl an Wasserstoffatomen des Polyolefins ist.

4. Fluorierungsverfahren nach einem beliebigen der Ansprüche 1 bis 3, wobei es weiterhin einen Schritt (d) des Entfernens der Nebenprodukte umfasst, welche sich während des Schrittes (c) gebildet haben.

5. Fluorierungsverfahren nach Anspruch 4, wobei der Schritt (d) durchgeführt wird, indem die Nebenprodukte, welche sich während des Schrittes (c) gebildet haben, gasförmig abgeführt werden, wobei sie vorteilhafterweise unter Vakuum gasförmig abgeführt werden.

6. Fluorierungsverfahren nach Anspruch 4 oder 5, wobei die Schritte (c) und (d) nacheinander durchgeführt werden.

7. Fluorierungsverfahren nach Anspruch 4, wobei der Schritt (d) durchgeführt wird, indem die Nebenprodukte, welche sich während des Schrittes (c) gebildet haben, auf chemische Weise abgefangen werden.

8. Fluorierungsverfahren nach einem beliebigen der Ansprüche 1 bis 7, wobei es weiterhin, nach dem Schritt (c), oder gegebenenfalls nach dem Schritt (d), einen Schritt (e1) umfasst, in welchem ein Vakuum an den Hohlraum angelegt wird, gefolgt von einem Schritt (e2), in welchem der Filter mit Diwasserstoff oder einer Mischung, welche Diwasserstoff umfasst, in Kontakt gebracht wird, wobei der Diwasserstoff oder die Mischung, welche Diwasserstoff umfasst, in gasförmigem Zustand in den Hohlraum eingeleitet wird, wobei die Molanzahl an Diwasserstoff, welche während des Schritts (e2) eingeleitet wird, vorteilweise höchstens gleich der Molanzahl an Difluor ist, welche während des Schrittes (c) eingeleitet wird.

9. Fluorierungsverfahren nach Anspruch 8, wobei die Mischung Diwasserstoff und Stickstoff umfasst, wobei der Volumenprozentanteil an Diwasserstoff in dieser Mischung vorteilhafterweise mindestens 2 Vol.-% beträgt und vorteilhafterweise im Bereich von 5 Vol.-% bis 20 Vol.-% liegt.

10. Fluorierungsverfahren nach Anspruch 8 oder 9, wobei der Schritt (e2) über eine Zeitdauer, die im Bereich von 10 min. bis 2 Std., vorteilhafterweise von 30 min. bis 60 min., liegt und/oder bei einer Temperatur durchgeführt wird, die im Bereich von 0 °C bis 200 °C, vorzugsweise von 20 °C min bis 80 °C liegt.

11. Fluorierungsverfahren nach einem beliebigen der Ansprüche 1 bis 10, wobei der Druck in dem Hohlraum, während des Schrittes (b), und gegebenenfalls während des Schrittes (e1), höchstens 100 Pa, vorteilhafterweise höchstens 50 Pa und vorzugsweise höchstens 10 Pa beträgt.

12. Fluorierungsverfahren nach einem beliebigen der Ansprüche 1 bis 11, wobei der Schritt (c) mittels Infrarotspektroskopie überwacht wird, insbesondere indem die Entwicklung des Verhältnisses ACH2/ACFx zwischen der Fläche der Infrarot-Schwingungsbanden, welche den -CH2-Gruppen entspricht, und der Somme der Flächen der Infrarot-Schwingungsbanden, welche den -CHF-Gruppen und den -CF2-Gruppen entspricht, mitverfolgt wird, wobei Schritt (c) insbesondere abgebrochen werden kann, sobald der Verhältnis ACH2/ACFx einen Wert von höchstens 15, vorteilhafterweise von höchstens 6 und vorzugsweise von höchstens 3 erreicht hat.

13. Verfahren zur Herstellung einer Pipettenspitze (20), die einen fluorierten Filter (26) umfasst, wobei das Verfahren die folgenden Schritte umfasst:
(i) Bereitstellen eines Filters (26), der von einer porösen feststofflichen Struktur aus Polyolefin, insbesondere aus Polyethylen gebildet wird,
(ii) Anbringen des Filters (26) in der Pipettenspitze und
(iii) Fluorieren des Filters (26), indem das Fluorierungsverfahren nach einem beliebigen der Ansprüche 1 bis 12 durchgeführt wird.

14. Pipettenspitze (20), die einen Filter (26) umfasst, **dadurch gekennzeichnet, dass** der Filter (26) von einer porösen feststofflichen Struktur aus Polyolefin, insbesondere aus Polyethylen, gebildet wird, wobei die Fluoratome mindestens einen Teil der Wasserstoffatome des Polyolefins ersetzen, indem das Fluorierungsverfahren nach einem beliebigen der Ansprüche 1 bis 12 durchgeführt wird.

15. Probennahmepipette (10), die eine Pipettenspitze (20) nach Anspruch 14 umfasst

## Claims

1. Method for fluorinating a filter (26) for a pipette tip (20), this filter (26) being formed by a porous solid polyolefin structure, the polyolefin being namely chosen from a polyethylene and a polypropylene and being advantageously a polyethylene, **characterized in that** it comprises the following steps:
(a) placing the filter (26) in an enclosure,
(b) creating a vacuum in the enclosure, and
(c) contacting the filter (26) with a fluorination agent introduced in the gaseous state into the enclosure,
**in that** the fluorination agent consists of difluorine F₂,
**in that** the difluorine F₂ is introduced into the enclosure at a partial pressure between 100 Pa and 10000 Pa, advantageously between 500 Pa and 8000 Pa and, preferably, between 750 Pa and 6000 Pa, and
**in that** step (c) is conducted at a temperature between 0 °C and 100 °C, advantageously between 10 °C and 60 °C and, preferably, between 15 °C and 25 °C.

2. Fluorination method according to claim 1, wherein step (c) is carried out for a duration between 1 min and 60 min, advantageously between 2 min and 45 min, preferably between 5 min and 45 min and, more preferably, between 10 min and 30 min.

3. Fluorination method according to claim 1 or 2, wherein, during step (c), a number of moles of difluorine greater than or equal to the equivalent number of moles of hydrogen atoms of the polyolefin is introduced, this number of moles of difluorine being advantageously greater than or equal to 5 times and, preferably, to 10 times the equivalent number of moles of hydrogen atoms of the polyolefin.

4. Fluorination method according to any one of claims 1 to 3, further comprising a step (d) of removing the by-products formed during step (c).

5. Fluorination method according to claim 4, wherein step (d) is carried out by degassing, advantageously by vacuum degassing, the by-products formed during step (c).

6. Fluorination method according to claim 4 or 5, wherein steps (c) and (d) are carried out successively.

7. Fluorination method according to claim 4, wherein step (d) is carried out by chemical trapping of the by-products formed during step (c).

8. Fluorination method according to any one of claims 1 to 7, further comprising, after step (c) or, if applicable, after step (d), a step (e₁) of creating a vacuum in the enclosure followed by a step (e₂) of contacting the filter with dihydrogen or a mixture comprising dihydrogen, the dihydrogen or the mixture comprising dihydrogen being introduced in the gaseous state into the enclosure, the number of moles of dihydrogen introduced, during step (e₂), being advantageously less than or equal to the number of moles of difluorine introduced during step (c).

9. Fluorination method according to claim 8, wherein the mixture comprises dihydrogen and nitrogen, the volume percentage of dihydrogen in this mixture being advantageously greater than or equal to 2% vol and, preferably, comprised between 5% vol and 20% vol.

10. Fluorination method according to claim 8 or 9, wherein step (e₂) is carried out for a duration between 10 min and 2 h and, advantageously, between 30 min and 60 min and/or is conducted at a temperature between 0 °C and 200 °C and, preferably, between 20 °C and 80 °C.

11. Fluorination method according to any one of claims 1 to 10, wherein, during step (b) and, if applicable, during step (e₁), the pressure in the enclosure is less than or equal to 100 Pa, advantageously less than or equal to 50 Pa and, preferably, less than or equal to 10 Pa.

12. Fluorination method according to any one of claims 1 to 11, wherein step (c) is monitored by infrared spectroscopy, in particular by tracking the evolution of the ratio A_{CH₂} / A_{CFₓ} of the area of the infrared vibration bands corresponding to the -CH₂-groups over the sum of the areas of the infrared vibration bands corresponding to the -CHF- groups and to the -CF₂- groups, step (c) being possibly stopped when this ratio A_{CH₂} / A_{CFₓ} reaches a value less than or equal to 15, advantageously less than or equal to 6 and, preferably, less than or equal to 3.

13. Method for producing a pipette tip (20) comprising a fluorinated filter (26), the method comprising the following steps:
(i) providing a filter (26) formed by a porous solid polyolefin structure, particularly made of polyethylene,
(ii) fitting the filter (26) in the pipette tip, and
(iii) fluorinating the filter (26) by implementing the fluorination method according to any one of claims 1 to 12.

14. Pipette tip (20) comprising a filter (26), **characterized in that** the filter (26) is formed by a porous solid polyolefin structure, in particular made of polyethylene, wherein fluorine atoms replace at least some of the hydrogen atoms of the polyolefin by implementing the fluorination method according to any one of claims 1 to 12.

15. Sampling pipette (10) comprising a pipette tip (20) according to claim 14 .
